## Europäisches Patentamt

## European Patent Office

## Office européen des brevets

(11) Publication number: **0 067 418**
**B1**

(12) **EUROPEAN PATENT SPECIFICATION**

(45) Date of publication of patent specification: **24.09.86**

(21) Application number: **82105072.1**

(22) Date of filing: **09.06.82**

(51) Int. Cl.⁴: **C 08 L 27/06,** C 08 J 9/32,
B 32 B 27/30, C 08 K 7/22

(54) A polyvinyl chloride resinous composition and product thereof.

(30) Priority: **09.06.81 JP 88966/81**
**09.06.81 JP 88967/81**
**22.06.81 JP 97272/81**
**24.08.81 JP 133171/81**

(43) Date of publication of application:
**22.12.82 Bulletin 82/51**

(45) Publication of the grant of the patent:
**24.09.86 Bulletin 86/39**

(84) Designated Contracting States:
**DE FR GB IT**

(56) References cited:
**US-A-4 226 906**

**CHEMICAL ABSTRACTS, vol. 84, no. 4, 26th
January 1976, page 55, col. 1, no. 18424k,
Columbus Ohio (USA);**

**CHEMICAL ABSTRACTS, vol. 90, no. 18, 30th
April 1979, page 36, col. 1, no. 138690q,
Columbus Ohio (USA);**

(73) Proprietor: **KANEGAFUCHI KAGAKU KOGYO
KABUSHIKI KAISHA
2-4 Nakanoshima 3-chome
Kita-ku Osaka-shi Osaka-fu (JP)**

(72) Inventor: **Takeuchi, Tooru
31-403, 5-Banchi, 5-Chome Torigainishi
Settsu-shi Osaka-fu (JP)**
Inventor: **Nakamura, Masaru
Higashiyama-danchi 6-201 45-Banchi, 2-Chome
Higashiyama Hirakata-shi Osaka-fu (JP)**
Inventor: **Aoishi, Eiji
2-6, 5-Chome, Torigainishi
Settsu-shi Osaka-fu (JP)**

(74) Representative: **Vossius & Partner
Siebertstrasse 4 P.O. Box 86 07 67
D-8000 München 86 (DE)**

(56) References cited:
**CHEMICAL ABSTRACTS, vol. 91, no. 18, 29th
October 1979, page 29, col. 2, no. 141651d,
Columbus Ohio (USA);**

**CHEMICAL ABSTRACTS, vol. 81, no. 24, 16th
December 1974, page 72, col. 2, no. 153704e,
Columbus Ohio (USA);**

EP 0 067 418 B1

Courier Press, Leamington Spa, England.

# 0 067 418

## Description

Polyvinyl chloride resins like vinyl chloride paste resins (hereinafter referred to as PVC resin) are normally in widespread use as a plastisol obtained by mixing with a plasticizer, a stabilizer, pigments, fillers or diluents, or as an organosol by mixing with a plasticizer, a stabilizer or a solvent.

Conventionally, this PVC plastisol and organosol exhibit a specific gravity of 1.0 or more and an average specific gravity of 1.2, when such a PVC resin with a specific gravity of 1.4 and a plasticizer with a specific gravity ranging from 0.9 to 1.0 are used.

In recent years such a plastisol and an organosol have been widely used in a variety of fields including walls, floor and table coverings, book covers, decorative containers, uphosteries, automobile interiors, toys, leathers, sealants, sails, crown caps.

In the field of floor coverings, however, as backings for floor coverings, asbestos papers, or glass fibre non-woven fabrics impregnated or coated with a PVC paste sol, or non-woven fabrics of glass fibres or synthetic fibres such as polyester and nylon impregnated or coated with polymers such as SBR and polyvinyl alcohol have been used. Asbestos papers make up an extremely large proportion of these backings but these entail numerous problems and defects. These include problems of public health as hazards recently discovered, peeling off at the time of re-covering and the waste disposal of used floor coverings. Further there is the fatal defect that when applied to a floor bending toward the inside at an angle greater than 90 degrees, the backings break though the upper portions of the floor coverings themselves can stand. This means that their commercial value is badly damaged. Moreover the floor coverings themselves are water-proof, but the backings of asbestos papers are inferior in water-proof properties with the result that the range of uses in unavoidably limited. In view of the foregoing numerous drawbacks, there is a great need for floor coverings eliminating such drawbacks.

In the Japanese Patent Examined Publication No. 41848/1972 there are disclosed, glass fibre or synthetic fibre non-woven fabrics, which are coated or impregnated with a PVC plastisol, or to which sheets of plasticized plastics having a thick tissue construction containing a filler in large quantites are joined. These materials are, in fact, improved in many respects as compared with asbestos papers, but the glass fibres of non-woven glass fibre fabrics tend to adhere to those handling them and cut their skin when being used or transported. Further these fabrics are weak in bending strength, resulting in a decrease in commercial value. The backings such as those disclosed in the Japanese Patent Examined Publication No. 41848/1972 or non-woven fabrics coated or impregnated with a PVC plastisol, though improved in respect of injury to the skin, bending strength, peeling off and the like, still possess adhesiveness peculiar to the PVC plastisol and are heavy in weight, and accordingly difficult to handle especially at the time of transportation and application. Furthermore those fabrics coated or impregnated with the PVC plastisol do not bond readily when applied to the floor, and can only be applied using selected adhesives, which is a defect peculiar to plasticized PVC resins. Eventually in some instances these coverings are applied to the floor by bonding thereto victoria lawns and synthetic fibre non-woven fabrics in order to remedy such deficiencies.

In an attempt to save on the weight of the PVC sol, foaming processes, either mechanical or chemical, have been proposed. Using such processes, although lightening of molded products is assuredly achieved in the long run, compressive elasticity, tensile strength, tear strength and dimensional stability are drastically reduced, and hence these coverings are not satisfactory in terms of their practical usefulness.

Molding compositions containing PVC and silas balloons are disclosed in JP—A—75—98,552 (C.A., Vol. 84, 1976, 18424K).

It is the object of the present invention to provide a PVC resinous composition which has low specific gravity and superior properties when processed into molded products like backings for floor coverings.

The foregoing object is accomplished by a polyvinyl chloride resinous composition comprising as main ingredients, 100 parts by weight of a PVC resin having an average particle size ranging from 0.2 to 200 μm, dry-blended with 20 to 200 parts by weight of a cellular filler having an apparent specific gravity of 0.01 to 0.8 g/cm$^3$ and an average size of 1.0 to 2000 μm.

The cellular filler used in the polyvinyl chloride resinous composition of the present invention preferably has a specific gravity of 0.1 to 0.5 g/cm$^3$, and an average size of 1.0 to 600 μm. Plasticizers, stabilizers, and further pigments, dyes and surface active agents are added to this blending, if necessary, and mixed uniformly by dry-blending, to thereby provide a light compound.

Where a cellular filler has been heretofore added to a paste sol compound, it was difficult to provide a plastisol since absorption of the plasticizer was vigorous because of the cellular filler being broken into the mixture, and when it is intended to daringly produce a sol a great amount of liquid state additives such as plasticizers had to be used. Still worse, the cellular filler added to make the compound light was broken out so that the desired purpose could not be attained, with the result that the specific gravity of the compound became approx. 1.2 times that of a normal plastisol. Hence in the conventional process (see e.g. comparative example 1) vigorous kneading with strong torque was required to provide intimate and uniform admixture, thereby cellular fillers were broken, while in the inventive process the desired admixture is obtained without such vigorous kneading, causing no destruction of the cellular fillers.

A series of studies have been made from extensive and various points, apart from a conventional PVC paste sol, by the present inventors, who have found that a polyvinyl chloride resinous composition made

2

light, having a free-flow property in the powder state and suitable for molding by heating at an increased pressure can be obtained by dry-blending a PVC resin, a plasticizer, a stabilizer and a cellular filler to provide uniform blending of the foregoing, without causing destruction of the cellular filler.

The PVC resin used in the present invention comprises homopolymers of vinyl chloride and copolymers of vinyl chloride with at least one other monomer copolymerisable therewith which are selected from the group consisting of vinyl esters such as vinyl acetate and vinyl propionate, acrylic or methacrylic esters, and olefinic monomers such as ethylene and propylene, having an average particle size ranging from 0.2 to 200 µm. Among these, PVC paste resin with particle sizes ranging from 0.2 to 50 µm is favourably employed as a main ingredient thanks to the excellent forming properties of the dry-blended composition when subjected to heat and pressure. Of course, PVC resins with particle sizes of more than 50 µm can be mixed therewith to the extent that forming under heat and pressure is feasible. Within the scope of the present invention to give a preferable dry-blended composition which may be subjected to molding, there are further included compositions which, in addition to PVC resin, contain an olefinic polymer such as polyethylene and polypropylene, an acrylic polymer such as polymethyl methacrylate and polybutyl acrylate, a rubber-like substance such as NBR and SBR, a polymer comprising acrylonitrile as a major ingredient, a vinyl polymer such as vinyl fluoride and vinyl bromide, a thermoplastic elastomer such as a copolymer of ethylene and vinyl acetate and the like. These compounds are mixed with the PVC resin to provide a PVC resinous composition.

The cellular filler used in the present invention may be an inorganic porous material which is made of alumina, shale, fly ash, silus, silica sand, volcanic rock, sodium silicate, borax, pearlite, obsidian and the like. Special examples are commercial products like "Alumina Babble"® (Showa Denko K.K.), "Kernamite"® (J. D. Mclaughlin), "Senospheres"® (A. A. Johnson), "Silus Balloon"® (Kyushu Kogyo Shikenjo), "Silica Balloon"® (produced by Shikoku Kaken K.K.), "Dia Balloon"® (Japan Metals & Chemicals Co., Ltd.), "Microballoon"® (Emerson and Cuming) and pearlite.

As suitable organic cellular filler, on the other hand, there may be porous materials which are made of phenolic resins, polyvinylidene chloride, epoxy resins and urea reins. Specific examples are commercial products like "Phenolic Microballoon"® (U.C.C.), "Salan Microspheres"® (Dow Chemical), "Eccospheres EP"® and "Eccospheres VF-O"® (Emerson & Cuming). There may be further included cellular fillers made of sinters of "Phenolic Microballoon", pitches such as "Carbo Spheres"® (General Technology) and "Kureca Spheres"®.

Among the foregoing cellular fillers, inorganic cellular fillers are preferred for use in the present invention, with "Silus Balloon", "Dia Balloon", "Microballoon" and pearlite being more preferred. These are employed singly or in combinations of two or more. To the PVC resinous composition containing the cellular fillers, other normal fillers may further be added. The strength of the molded products can be enhanced by adding, for example, glass fibre or asbestos.

The plasticizer used in the present invention may include plasticizers generally used in polyvinyl chloride such as esters of phthalic acid, esters of fatty acids, esters of phosphoric acid, polyester plasticizers, epoxy plasticizers, chlorinated paraffins and the like. The amount of plasticizer used is in the range of from 20 to 100 parts by weight, more preferably 40 to 80 parts by weight per 100 parts by weight of the PVC resin.

Dry-blending of the ingredients is carried out at a temperature from room temperature to about 100°C, more preferably 50 to 80°C, by the use of a suitable blending machine such as a Henshel mixer, a "Super Mixer"® (Kawata Seisakusho), a ribbon blender and the like. The PVC resinous compositions obtained by dry-blending according to the present invention possess superior powder properties suitable for powder molding, especially a moderate free-flow property.

As stated earlier, the present invention is characterized by dry-blending a PVC resin and a cellular filler so that even a PVC paste resin with a small particle size of about 1 µm can be dry-blended, thus permitting the use of a wide range of an average particle size of from 0.2 to 50 µm.

As apparent from the foregoing, PVC resinous compositions of the present invention which are made light and have a free-flow property exhibit unique properties that have never been obtained in a conventional plastisol or organosol, being far superior in particular in powder molding, and accordingly they can be used in various fields including, for example, floor coverings, wall, automobile parts, toys, sealants and sails, as mentioned above.

These compositions thus obtained exhibiting superior free-flow properties in the powder state may be heated at an increased pressure to be formed into a sheet, by the use of which a variety of molded products are produced as a basis of structural materials.

The so obtained PVC sheet is used solely with its surface processed as, for instance, a floor covering, but is also used as a laminated product by combining the sheet with a core layer such as victoria lawns, glass fibre or synthetic fibre non-woven fabrics, a foamed layer and a surface layer (skin layer). When the foregoing molded products are used as, for instance, a floor cover backing, not only is the backing made drastically lighter, but peeling off upon recovering and bending strength can be markedly improved to such a degree as to enable folding covering. In addition, the covering of the present invention does not require the kind of adhesives as when applied to a floor and is superior in water-proof properties so that it is possible to apply it to damp places. Moreover it is free from the disagreeable adhesiveness peculiar to a

**0 067 418**

plasticized vinyl product containing a great amount of plasticizers and superior in dry touchness, besides possessing the characteristics which conventional backings have.

Hereinafter the present invention will be described in more detail by way of the following examples.

### Example 1

| | |
|---|---|
| PVC paste resin ($\bar{p}$=800, Average particle size: 1 μm)<br>($\bar{p}$=average degree of polymerization)<br>100 parts by weight | |
| D.O.P. (Dioctyl phthalate) | 40 |
| Silus Balloon (Apparent specific gravity: 0.14~0.32 g/cm$^3$)<br>(Sankilite-Y)® (Sanki Kogyo K.K.) | 50 |
| Stabilizer (Ca—Zn) | 8 |

The foregoing composition was dry-blended using a domestic juice mixer to obtain a compound. The obtained compound had an apparent specific gravity of 0.53 g/cm$^3$ and was superior in powder properties, especially in free-flow property.

### Example 2

| | |
|---|---|
| PVC paste resin (VAc—VCl copolymer, $\bar{p}$=1200, Average<br>particle size: 1μm) | 100 parts by weight |
| D.O.P. | 50 |
| Silus Balloon (Sankilite-Y) | 100 |
| Stabilizer (Ca—Zn) | 3 |

The foregoing composition was subjected to dry-blending in a similar fashion to that of Example 1, preparing a compound. The apparent specific gravity of the compound was 0.40 g/cm$^3$ and it exhibited a good free-flow property.

### Comparative Example 1

| | |
|---|---|
| PVC paste resin (VCl homopolymer, $\bar{p}$=1700, Average<br>particle size: 1μm) | 100 parts by weight |
| D.O.P. | 60 |
| Silus Balloon (Sankilite-Y) | 50 |
| Stabilizer (Ca—Zn) | 3 |
| Diluent (Mineral turpentine) | 10 |

The aforesaid composition was blended using an Ishikawa style grinder. As a result, Silus Balloon was broken out and thus liquid ingredients were absorbed, thereby a paste-like compound with a very high viscosity being prepared. The resulting compound had a specific gravity of 1.1 g/cm$^3$, exhibited no fluidity and thus could not be used practically.

### Example 3

| | |
|---|---|
| PVC paste resin (VCl homopolymer, $\bar{p}$=1700, Average<br>particle size: 3 μm) | 100 parts by weight |
| T.C.P. (Tricresyl phosphate) | 55 |
| NB-20 (DOP containing 20% of NBR) | 10 |
| Silus Balloon (Sankilite-Y) | 100 |
| Stabilizer (Ba—Zn) | 3 |

Using a Henshel style mixer the foregoing composition was dry-blended to prepare a compound. The resultant compound showed an apparent specific gravity of 0.45 g/cm$^3$ and satisfactory powder properties including free-flow property.

### Example 4

| | |
|---|---|
| PVC (VCl homopolymer, average particle size: 30 μm) | 100 parts by weight |
| DOP | 50 |
| Pearlite (Apparent specific gravity: 0.04~0.2 g/cm$^3$,<br>Average particle size: 150 μm;<br>Mitui Mining & Smelting Co., Ltd.) | 50 |
| Stabilizer (Ba—Zn) | 3 |

4

The above composition was subjected to dry-blending using a Henshel mixer to obtain a compound, which showed an apparent specific gravity of 0.52 g/cm³ and good powder properties.

## Example 5

| | |
|---|---|
| PBM-11® (VCl-VAc copolymer, $\bar{p}$=1000, Average particle size: 50 μm; Kanegafuchi Chem. Ind. Co., Ltd.) | 100 parts by weight |
| D.O.P. | 40 |
| Silus Balloon (Sankilite-Y) | 50 |
| Stabilizer | 3 |

By dry-blending the foregoing composition using a Henshel style mixer, a compound was produced which had an apparent specific gravity of 0.50 g/cm³ and was superior in powder properties.

## Example 6

| | |
|---|---|
| PVC (VCl homopolymer, Average particle size: 30 μm) | 50 parts by weight |
| PVC (VCl—VAc copolymer, $\bar{p}$=800, Average particle size: 120 μm) | 50 |
| D.O.P. | 50 |
| Silus Balloon (Sankilite-Y) | 50 |
| Stabilizer | 3 |

The foregoing composition was dry-blended by a Henshel mixer to thus prepare a compound. The obtained compound exhibited an apparent specific gravity of 0.52 g/cm³ and good powder properties.

## Example 7

| | |
|---|---|
| PBM-11® (VCl—VAc copolymer, $\bar{p}$=1000, Average particle size: 50 μm) | 50 parts by weight |
| PVC (VCl—VAc copolymer, $\bar{p}$=800, Average particle size: 120 μm) | 50 |
| Silus Balloon (Sankilite-Y) | 50 |
| Stabilizer | 3 |

By dry-blending the composition as aforesaid a compound was provided, the apparent specific gravity of which was 0.52 g/cm³, exhibiting superior powder properties.

## Example 8

| | |
|---|---|
| PCH-12® (VCl—VAc copolymer, $\bar{p}$=1400, Average particle size: 1μm; (Kanegafuchi Chem. Ind. Co. Ltd.) | 100 parts by weight |
| DOP | 50 |
| Silus Balloon (Sankilite-Y) | 100 |
| Stabilizer (Ca—Zn) | 3 |

The foregoing compound was dry-blended by using Henshel style mixer to obtain a compound having a superior free-flow property. The compound thus obtained was applied by powder coating to a release paper in a thickness of about 0.7 mm and subjected to the treatment for 2 minutes at 190°C under a pressure of about 15 bar. By this means a very light sheet product with a specific gravity of 0.7 g/cm³, superior in dry touchness and flexibility was provided. The sheet product had a tensile strength of about 15 bar and an elongation of 90%.

## Example 9

| | |
|---|---|
| PSH-10® (VCl homopolymer, $\bar{p}$=1700, Average particle size: 1 μm); (Kanegafuchi Chem. Ind. Co., Ltd.) | 100 parts by weight |
| TCP (Tricresyl phosphate) | 55 |
| Pearlite (Apparent specific gravity: 0.04~0.2 g/cm³, Average particle size: 150 μm); (Mitsui Mining and Smelting Co., Ltd.) | 100 |
| Stabilizer (Ba—Zn) | 3 |

The compound as aforesaid was dry-blended in a similar fashion to that of Example 8, thus preparing a compound with a good free-flow property. The powder coating of the obtained compound was uniformly made on a ferro type plate in a thickness of 0.6 mm, on the surface of which a glass fibre non-woven fabric was heaped up, then being subjected to the treatment for 5 minutes at 180°C under a pressure of about 10 bar. The so obtained sheet product had a specific gravity of 0.65 g/cm³, being superior in dry touchness, flexibility and lightness. The glass fibre non-woven fabric was perfectly united to the compound, having adequate bonding strength, and accordingly being useful as a floor cover backing. The sheet product exhibited a adequate strength of about 150 bar and elongation of 5%.

Example 10

| | |
|---|---|
| PSL-6® (VCl homopolymer, $\bar{p}$=1000, Average particle size: 1 μm); | |
| (Kanegafuchi Chemical Ind. Co., Ltd.) | 70 parts by weight |
| PBM-11® (VCl—VAc copolymer, $\bar{p}$=1100, Average particle size: 50 μm); | |
| (Kanegafuchi) | 30 |
| Chlorinated paraffin (containing 45% of chlorine) | 60 |
| Dia Balloon (Apparent specific gravity: 0.12~0.15 g/cm³ | |
| Average particle size: 180 μm); | |
| (Japan Metals & Chemicals Co., Ltd.) | 50 |
| Microballoon (Apparent specific gravity: 0.16~0.2 g/cm³, | |
| Average particle size: 10 μm); | |
| (Emerson & Cuming) | 50 |
| Stabilizer (Barium stearate) | 5 |

The above composition was subjected to dry-blending in a similar manner to that of Example 8 to thus obtain a compound superior in free-flow property. On a victoria lawn located on a ferro type plate the compound was applied, then heated at 190°C at a pressure of about 10 bar for 4 minutes to provide a sheet product. The so obtained sheet product had a specific gravity of 0.68 g/cm³ and was superior in lightness, dry touchness and flexibility. Bonding force of the compound and the victoria lawn was sufficient and the sheet product showed a tensile strength of about 100 bar and elongation of 4%. Besides these, the tear strength was also satisfactory enough for use as a floor cover backing.

Comparative Example 2

| | |
|---|---|
| PSH-10® (VCl homopolymer, $\bar{p}$=1700, Average particle size: 1μm) | 100 parts by weight |
| DOP | 100 |
| Calcium carbonate (Average particle size: 2.1 μm) | 150 |
| Stabilizer (Ba—Zn) | 3 |

The aforesaid composition was blended with an Ishikawa style grinder to provide a plastisol. The obtained plastisol was applied by coating onto a glass fibre non-woven fabric in a thickness of 0.5 mm and subjected to gellation for 5 minutes at 200°C. The same product as described in the Japanese Patent Examined Publication No. 41848/1972 was produced. The product possessed a specific gravity of 1.6 g/cm³ and was satisfactory in flexibility, tensile strength and tear strength in use for a floor cover backing. Nevertheless, the product exhibited strong adhesiveness because of high content of a plasticizer and was very heavy owing to thick tissue of the coated plastisol, which was basically different in performance from backings of the present invention.

Example 11

| | |
|---|---|
| PCH-12® (VCl—VAc copolymer, $\bar{p}$=1400, Average particle size: 1 μm) | 70 parts by weight |
| PBM-10® (VCl homopolymer, $\bar{p}$=1000, Average particle size: 25 μm) | 30 |
| TCP (Tricresyl phosphate) | 70 |
| Silus Balloon (Sankilite-Y02) | 100 |
| Stabilizer (Barium stearate) | 3 |

The foregoing composition was dry-blended with a Henshel style mixer to obtain a compound with good fluidity as powder. The compound was then applied by powder coating onto a steel plate treated with polytetrafluoroethylene in a thickness of 0.5 mm and on the powder coating a glass fibre non-woven fabric was provided in a density of 50 g/m², these then being subjected to the treatment for 2 minutes at 190°C under a pressure of about 15 bar. In the following way a floor covering was made while using the obtained laminated sheet as a backing.

(Foamed sol composition)

| | |
|---|---|
| PSL-10® (VCl homopolymer, $\bar{p}$=1000, Average particle size; 1 μm) | 100 parts by weight |
| PBM-10® (VCl homopolymer, $\bar{p}$=1000, Average particle size: 25 μm) | 50 |
| DOP | 50 |
| Secondary agent (azodicarbonamide) | 3 |
| TiO₂ | 2 |
| Blowing assistant (ZnO) | 1 |

# 0 067 418

(Non-foamed sol composition)

(PSH-10® (VCl homopolymer, $\bar{p}$=1700, Average particle size: 1 μm)    70 parts by weight
PBM-B3® (VCl homopolymer, $\bar{p}$=1000, Average particle size: 30 μm)    30
DOP    45
TXIB (Texamol isobutyrate)    5
Stabilizer (AC-118®, Adeka Argus Chem. Co., Ltd.)    3

The foregoing compositions were blended and deaerated with an Ishikawa style grinder to give a foamed sol and a non-foamed sol, respectively.

On the side of the non-woven fabric of the backing the foregoing foamed sol was applied in a thickness of 0.3 mm and subjected to preliminary gellation at 170°C for 2 minutes to provide a foamed layer. On the foamed layer the foregoing non-foamed sol was applied in a thickness of 0.2 mm and then subjected to preliminary gellation at 170°C for 2 minutes to thus form a surface layer (skin layer).

After measurement of the thickness of the preliminarily gelled layer, foaming was continued at 210°C for 2 minutes. The degree of foaming of the foamed layers was about 3.5 times and a light floor covering was produced. The obtained floor covering had a specific gravity of 0.75 g/cm³ and was superior in flexibility and dry touchness.

Comparative Example 3

In accordance with a process disclosed in the Japanese Patent Examined Publication No. 41848/1972, a backing was prepared with a composition stated below.

PSH-10® (PVC homopolymer, $\bar{p}$=1700, Average particle size: 1 μm)    100 parts by weight
DOP    100
CaCO₃ (average particle size: 2.1 μm)    150
Stabilizer (Ca—Zn)    3

A plastisol was obtained by blending the foregoing composition with an Ishikawa style grinder. The plastisol so obtained was applied onto a glass fibre non-woven fabric in a density of 50 g/m² in a thickness of 0.5 mm, then subjected to the treatment at 200°C for 5 minutes. The laminated sheet so obtained was the same as that described in said publication and able to serve as a backing.

On the surface of the non-woven fabric the foamed sol and the non-foamed sol described in Example 11 were applied, then subjected to gellation and foaming in the same way as in Example 11, thus providing a floor covering. The degree of foaming was 3.5 times and superior in uniformity of cells. The floor covering had a specific gravity of 1.55 g/cm³, was very heavy and adhesive in the surface of the backing, though superior in flexibility, in which points it differed essentially from that obtained in Example 11.

The floor coverings obtained in Example 11 and Comparative Example 3 were compared and the results are shown in Table 2.

TABLE 2

| Floor covering / Performance | Present invention | Japanese patent examined publication No. 41848/1972 |
|---|---|---|
| Specific gravity (g/cm³) | 0.75 | 1.55 |
| Weight | Light | Very heavy |
| Strength | Superior | Superior |
| Touchness (texture) | Dry | Wet, adhesive |
| Adhesives | Free choice | Only adhesives for soft vinyls |
| Soundproofing effect | Superior | Normal |
| Adiabatic effect | Superior | Normal |

As is apparent from the above comparison, the composition and molded product of the present invention, when used in a floor covering, produce an outstanding effect of making it lighter than the conventional coverings, and for instance, compared with those disclosed in Japanese Patent Examined

7

## 0 067 418

Publication No. 41848/1972, can be reduced to half or below in weight. (The specific gravity of the present floor coverings ranges from about 0.5 to about 0.8 g/cm³.) Moreover, they are far superior in sound-proofing effect, adiabatic effect, bending strength, dry touchness, water resistance, dimensional stability, cold resistance and the like, so that the present invention is capable of supplying floor coverings more advantageously than the conventional ones.

### Claims

1. A polyvinyl chloride resinous composition comprising, as main ingredients, 100 parts by weight of a polyvinyl chloride resin having an average particle size ranging from 0.2 to 200 µm, dry-blended with 20 to 200 parts by weight of a cellular filler having an apparent specific gravity of 0.01 to 0.8 g/cm³ and an average size of 1.0 to 2000 µm.

2. The composition of Claim 1, wherein the polyvinyl chloride resin comprises homopolymers of vinyl chloride or copolymers of vinyl chloride with at least one of other monomers copolymerizable therewith which are selected from the group consisting of vinyl esters such as vinyl acetate and vinyl propionate, acrylic or methacrylic esters, and olefinic monomers such as ethylene and propylene.

3. The composition of Claim 1 or 2, wherein the polyvinyl chloride resin comprises those mainly containing polyvinyl chloride paste resin.

4. The composition of Claim 1, wherein the cellular filler is an inorganic cellular filler.

5. The composition of Claim 4, wherein the inorganic cellular filler is selected from the group consisting of Silus Balloon, Dia Balloon, Microballoon, pearlite and a mixture of foregoings.

6. The composition of Claim 1, wherein 20 to 100 parts by weight of a plasticizer are added to 100 parts by weight of the polyvinyl chloride resin.

7. The use of the polyvinyl chloride resinous composition according to claims 1 to 6 for the production of molded products.

### Patentansprüche

1. Polyvinylchloridharz-Zusammensetzung, umfassend als Hauptbestandteile 100 Gewichtsteile eines Polyvinylchloridharzes mit einer durchschnittlichen Teilchengröße von 0,2 bis 200 µm, trocken vermischt mit 20 bis 200 Gewichtsteilen eines zellulären Füllstoffs mit einem spezifischen Schüttgewicht von 0,01 bis 0.8 g/cm³ und einer durchschnittlichen Größe von 1,0 bis 2000 µm.

2. Zusammensetzung nach Anspruch 1, in der das Polyvinylchloridharz Homopolymerisate von Vinylchlorid oder Copolymerisate von Vinylchlorid mit mindestens einem damit copolymerisierbaren anderen Monomeren, nämlich Vinylester, wie Vinylacetat und Vinylpropionat, Acrylsäure- oder Methacrylsäureester und olefinische Monomere, wie Äthylen und Propylen, umfaßt.

3. Zusammensetzung nach Anspruch 1 oder 2, in der das Polyvinylchloridharz ein Harz ist, das hauptsächlich Polyvinylchlorid-Pastenharz enthält.

4. Zusammensetzung nach Anspruch 1, in der der zelluläre Füllstoff ein anorganischer zellulärer Füllstoff ist.

5. Zusammensetzung nach Anspruch 4, in der der anorganische zelluläre Füllstoff Silus Balloon, Dia Balloon, Microballoon, Pearlit oder ein Gemisch davon ist.

6. Zusammensetzung nach Anspruch 1, in der 20 bis 100 Gewichtsteile eines Weichmachers zu 100 Gewichtsteilen Polyvinylchloridharz zugesetzt sind.

7. Verwendung der Polyvinylchloridharz-Zusammensetzung nach den Ansprüchen 1 bis 6 zur Herstellung von geformten Produkten.

### Revendications

1. Une composition résineuse de chlorure de polyvinyle comprenant comme ingrédients principaux 100 parties en poids d'une résine de chlorure de polyvinyle ayant une taille moyenne des particules comprise dans la gamme de 0,2 à 200 µm, mélangée à sec avec 20 à 200 parties en poids d'une charge cellulaire ayant une masse volumique apparente de 0,01 à 0,8 g/cm³ et une taille moyenne de 1,0 à 2 000 µm.

2. La composition de la revendication 1 dans laquelle la résine de chlorure de polyvinyle comprend des homopolymères de chlorure de vinyle ou des copolymères de chlorure de vinyle et d'au moins un autre monomère copolymérisable avec celui-ci qui sont choisis dans le groupe constitué par les esters vinyliques, tels que l'acétate de vinyle et le propionate de vinyle, les esters acryliques ou méthacryliques et les monomères oléfiniques, tels que le éthylène et le propylène.

3. La composition de la revendication 1 ou 2 dans laquelle la résine de chlorure de polyvinyl comprend celles contenant principalement une résine pâteuse de chlorure de polyvinyle.

4. La composition de la revendication 1 dans laquelle la charge cellulaire est une charge cellulaire minérale.

5. La composition de la revendication 4 dans laquelle la charge cellulaire minérale est choisis dans le groupe constitué par le Silus Balloon, le Dia Balloon, le Microballoon, la perlite et un mélange des précédents.

6. La composition de la revendication 1 dans laquelle 20 à 100 parties en poids d'un plastifiant sont ajoutées à 100 parties en poids de la résine de chlorure de polyvinyl.

7. L'emploi de la composition résineuse de chlorure de polyvinyle selon les revendications 1 à 6 pour la production de produits moulés.